# EUROPÄISCHE PATENTSCHRIFT

(11) **EP 3 372 753 B1**
(45) Veröffentlichungstag und Bekanntmachung des Hinweises auf die Patenterteilung: **19.02.2020**
(21) Anmeldenummer: 18157986.3
(22) Anmeldetag: 22.02.2018
(51) Int. Cl.: E04H 12/16

(54) **VERFAHREN, ARRETIERVORRICHTUNG UND SYSTEM ZUM VORSPANNEN EINES TURMBAUWERKS**
METHOD, LOCKING DEVICE AND SYSTEM FOR PRETENSIONING A TOWER STRUCTURE
PROCÉDÉ, DISPOSITIF D'ARRÊT ET SYSTÈME DE PRÉCONTRAINTE D'UNE TOUR

(30) Priorität: 07.03.2017 DE 102017203645; 20.03.2017 DE 102017204566
(43) Veröffentlichungstag der Anmeldung: 12.09.2018
(73) Patentinhaber: KB Vorspann-Technik GmbH, 82152 Krailling (DE)
(72) Erfinder: Huber, Andreas, 9991 Dölsach (AT); Fischer, Christoph, 86420 Diedorf (DE); Damoser, Manfred, 5071 Wals b. Salzburg (AT); Hameter, Manfred, 5020 Salzburg (AT); Huber, Harald, 9900 Oberlienz (AT); Heubel, Thomas, 81827 München (DE)
(74) Vertreter: Körfer, Thomas

(56) Entgegenhaltungen:
- EP-A1- 2 339 094
- EP-A2- 1 262 614
- WO-A1-2014/037421
- AT-B- 194 116
- DE-A1-102013 225 124
- DE-B3- 10 249 266
- DE-C- 930 546

## Beschreibung

Die Erfindung betrifft ein Verfahren zum Vorspannen eines Turmbauwerks aus übereinander angeordneten Bauelementen, die mithilfe mehrerer Spannglieder vorgespannt werden, eine Arretiervorrichtung zur Aufnahme eines Spannglieds sowie ein entsprechendes Vorspann-System.

Im Allgemeinen wächst der Bedarf an Turmbauwerken aus übereinander angeordneten Bauelementen, die mithilfe mehrere Spannglieder vorgespannt werden und insbesondere für die Errichtung von Windkraftanlagen eingesetzt werden, mit der steigenden Nachfrage nach erneuerbaren Energien.

Das Dokument EP 1 262 614 A2 zeigt ein Turmbauwerk aus Spannbeton, bei dem sich zwischen dem Fundament und der Turmkrone mehrerer Spannglieder erstrecken, durch die die Turmwandung mit einer Vorspannung beaufschlagbar ist. Auch wenn diese Spannglieder außerhalb der Turmwandung durch den Hohlraum des Turmbauwerks aus Spannbeton geführt sind, müssen die Spannglieder nachteilig jeweils mithilfe eines externen Kranes eingezogen werden, woraus sowohl hohe Kosten als auch unflexible Zeitfenster für die Errichtung des Turmbauwerks bzw. für das Vorspannen desselben resultieren. WO2014/037421A1, EP2339094A1 und DE102013225124A1 offenbaren weitere Verfahren zum Vorspannen gemäß dem Stand der Technik. DE10249266B3, AT194116B und DE930546C offenbaren darüber hinaus übliche Arretierungen für Spannglieder gemäß dem Stand der Technik.

Demnach ist es die Aufgabe der vorliegenden Erfindung, ein Verfahren, eine Arretiervorrichtung sowie ein Vorspann-System zum Vorspannen eines Turmbauwerks zur Verfügung zu stellen, bei dem im Hinblick auf den gesamten Vorspann-Prozess vorteilhafterweise auf einen externen Kran verzichtet werden kann.

Die vorgenannte Aufgabe wird durch das Verfahren gemäß Anspruch 1, durch die Arretiervorrichtung zur Aufnahme eines Spannglieds gemäß Anspruch 3 sowie das Vorspann-System gemäß Anspruch 8 gelöst. Dabei enthalten die jeweils abhängigen Ansprüche vorteilhafte Weiterbildungen der Erfindung.

Ein erster Aspekt der Erfindung ist ein Verfahren zum Vorspannen eines Turmbauwerks aus übereinander angeordneten Bauelementen, die mithilfe mehrerer Spannglieder vorgespannt werden, mit den folgenden Verfahrensschritten: Hochziehen der Spannglieder jeweils mithilfe eines Zugelements, das von einer Turmkrone am oberen Ende hinabgelassen wird, und temporäres Arretieren der hochgezogenen Spannglieder jeweils mithilfe einer Arretiervorrichtung im Bereich der Turmkrone. Durch das Hochziehen der Spannglieder in Kombination mit der zunächst temporären Arretierung derselben im Bereich der Turmkrone ist es vorteilhafterweise möglich, auf den Einsatz eines externen Kranes gänzlich zu verzichten, da so jedes Spannglied direkt von der Turmkrone selbst aus hochgezogen werden kann.

Es ist vorteilhaft, wenn die Spannglieder im Inneren des Turmbauwerks, das vorzugsweise aus Bauelementen aus Beton besteht, aber außerhalb der Wandung der Bauelemente geführt sind. Auf diese Weise wird sichergestellt, dass die Bauelemente besonders einfach herzustellen sind, da sie keine entsprechenden Hohlräume zur Führung der Spannglieder aufweisen müssen. Zudem vereinfacht sich so die Errichtung des Turmbauwerks, da beim Anordnen der Bauelemente übereinander nicht darauf geachtet werden muss, dass etwaige Hohlräume zur Führung der Spannglieder bündig übereinander liegen. Außerdem ist es vorteilhafterweise möglich, die Spannglieder jederzeit zu inspizieren, um diese beispielsweise auf Korrosion oder andere Beschädigungen zu kontrollieren.

Weiterhin wird erfindungsgemäß die Arretiervorrichtung nach dem Anbringen einer Fixiervorrichtung, die ein Spannglied jeweils endgültig im Bereich der Turmkrone fixiert, entfernt. Da die Fixiervorrichtung ein Spannglied bei minimalen Abmessungen jeweils optimal in Position hält, ist es problemlos möglich, die Arretiervorrichtung durch diese zu ersetzen. Die Arretiervorrichtung hält das jeweilige Spannglied dabei dennoch so lange in Position, bis die Fixiervorrichtung im Bereich des Endes des betreffenden Spannglieds angebracht ist. Auf diese Weise wird das Anbringen der Fixiervorrichtung besonders erleichtert, da aufgrund der Zugentlastung durch die Arretiervorrichtung kein Zug im Bereich des Endes des Spannglieds auftritt.

Ferner werden die Spannglieder erfindungsgemäß jeweils im Bereich eines Fundaments des Turmbauwerks mithilfe einer Vorspannvorrichtung, insbesondere mithilfe einer Vorspannpresse, vorgespannt und anschließend mithilfe einer Fixiervorrichtung fixiert. Vorteilhafterweise wird das Turmbauwerk derart vorgespannt, dass es allen auftretenden Belastungen standhält.

Ein zweiter Aspekt der Erfindung ist eine Arretiervorrichtung zur Aufnahme eines Spannglieds zum Vorspannen eines Turmbauwerks aus übereinander angeordneten Bauelementen, welche mindestens zwei Klemmbacken aufweist, deren Abstand mithilfe einer Einstelleinrichtung einstellbar ist. Auf diese Weise wird ein Spannglied optimal gehalten ohne aus der Arretiervorrichtung herauszurutschen.

Vorzugsweise umfasst die Arretiervorrichtung mehrere, insbesondere fünf, Klemmbacken, so dass das Spannglied die Arretiervorrichtung auch bei hohen Zugkräften nicht verlassen kann. Dies ist insbesondere dann vorteilhaft, wenn das Spannglied mehrere Litzen aufweist.

Ferner weist jede Klemmbacke auf einer Seite und/oder auf beiden Seiten bevorzugt mehrere Einkerbungen auf, um Spannelemente, insbesondere Litzen oder Drähte, des Spannglieds sicher in Position zu halten. Die vorgenannten Einkerbungen führen vorteilhafterweise dazu, dass die Litzen des betreffenden Spannglieds optimal gehalten, aber dennoch nicht beschädigt werden.

Weiter vorzugsweise weist die Einstelleinrichtung mindestens eine Schraubverbindung auf, wobei der Abstand zwischen den Klemmbacken mittels der Schrauben variierbar ist. Dementsprechend lässt sich der Druck, mit dem ein Spannglied jeweils in der Arretiervorrichtung gehalten wird, vorteilhafterweise stufenlos anpassen.

Des Weiteren ist es vorteilhaft, wenn die Arretiervorrichtung mindestens eine Öse oder mindestens einen Anhängebolzen zur Befestigung eines Zugelements, insbesondere eines Zugseils, aufweist. Auf diese Weise lässt sich das Spannglied besonders effizient und einfach nach oben ziehen.

Ferner erfindungsgemäß weist die Arretiervorrichtung einen ersten Teil und einen zweiten Teil auf, woraus sich ein Vorteil sowohl hinsichtlich Portabilität der Arretiervorrichtung als auch betreffend Montage und Demontage am bzw. vom Spannglied ergibt.

Erfindungsgemäß sind der erste Teil und der zweite Teil der Arretiervorrichtung miteinander verbindbar. Somit wird ein Vorteil hinsichtlich der Stabilität der Arretiervorrichtung erzielt.

Ein dritter Aspekt der Erfindung ist ein Vorspann-System zum Vorspannen eines Turmbauwerks aus übereinander angeordneten Bauelementen, die mithilfe mehrerer Spannglieder vorgespannt sind, wobei das System eine Arretiervorrichtung gemäß dem zweiten Aspekt der Erfindung und ggf. den entsprechenden vorteilhaften Weiterbildungen umfasst.

Vorzugsweise sind die Spannglieder im Inneren des Turmbauwerks aus Bauelementen aus Beton, aber außerhalb der Wandung der Bauelemente geführt. Auf diese Weise wird sichergestellt, dass die Bauelemente selbst besonders einfach herzustellen sind, da sie keine entsprechenden Hohlräume zur Führung der Spannglieder aufweisen müssen. Zudem vereinfacht sich so die Errichtung des Turmbauwerks, da beim Anordnen der Bauelemente übereinander nicht darauf geachtet werden muss, dass etwaige Hohlräume zur Führung der Spannglieder bündig übereinander liegen. Außerdem ist es vorteilhafterweise möglich, die Spannglieder jederzeit zu inspizieren, um diese beispielsweise auf Korrosion oder andere Beschädigungen zu kontrollieren.

Es ist weiterhin vorteilhaft, wenn das System eine im Bereich einer Turmkrone befindliche Winde umfasst, um die Spannglieder jeweils mithilfe eines Zugelements, insbesondere eines Zugseils, hochzuziehen, wobei sich die Turmkrone im oberen Bereich des Turmbauwerks befindet. Auf diese Weise ist es vorteilhafterweise möglich, auf den Einsatz eines externen Kranes gänzlich zu verzichten, da so jedes Spannglied direkt von der Turmkrone selbst aus hochgezogen werden kann.

Vorzugsweise ist die Winde an einem schwenkbaren und/oder drehbaren Arm angeordnet. Auf diese Weise lässt sich vorteilhafterweise jede Position der Winde erreichen, die für das Einziehen der Spannglieder jeweils günstig ist.

Weiter vorzugsweise ist der schwenkbare und/oder drehbare Arm derart insbesondere an einer im Bereich der Turmkrone befindlichen Traverse arretiert, dass der Drehpunkt des schwenkbaren und/oder drehbaren Arms im Zentrum oder wenigstens in der Nähe des Zentrums der Turmkrone liegt. Auf diese Weise sind insbesondere Positionen, die symmetrisch zum Zentrum der Turmkrone liegen, besonders vorteilhaft zu erreichen.

Es ist außerdem vorteilhaft, wenn durch Schwenken und/oder Drehen des schwenkbaren und/oder drehbaren Arms die Winde derart über jeder von mehreren für das Einbringen eines Spanngliedes vorgesehenen Öffnung im Bereich der Turmkrone positioniert werden kann, dass ein Hochziehen des entsprechenden Spannglieds mithilfe des Zugelements möglich ist.

Ferner weist der schwenkbare und/oder drehbare Arm bevorzugt im Bereich des vom Drehpunkt entfernten Teils eine Stütze auf. So hält der vorgenannte Arm vorteilhafterweise auch hohen Belastungen durch das aufgrund seines Eigengewichts nach unten ziehende Spannglied stand.

Weiter vorzugsweise weist die Stütze Räder auf, so dass die Stütze im Bereich der Turmkrone bewegbar bzw. verfahrbar ist. Dementsprechend lässt sich die Position der Stütze vorteilhafterweise besonders einfach verändern. Die Räder sind vorzugsweise nur zum Verfahren der Stütze geeignet. Der Lastabtrag während des Zugvorgangs wird vorzugsweise über feste Spindelfüße neben den Rädern gewährleistet.

Exemplarische Ausführungsbeispiele der Erfindung sind in den Zeichnungen nur beispielhaft dargestellt und werden im Folgenden näher beschrieben.

In der Zeichnung zeigen
- Fig. 1a: die schematische Ausführung eines beispielhaften ersten Schrittes des erfindungsgemäßen Verfahrens;
- Fig. 1b: die schematische Ausführung eines beispielhaften zweiten Schrittes des erfindungsgemäßen Verfahrens;
- Fig. 1c: die schematische Ausführung eines beispielhaften dritten Schrittes des erfindungsgemäßen Verfahrens;
- Fig. 1d: die schematische Ausführung eines beispielhaften vierten Schrittes des erfindungsgemäßen Verfahrens;
- Fig. 1e: die schematische Ausführung eines beispielhaften fünften Schrittes des erfindungsgemäßen Verfahrens;
- Fig. 2a: die dreidimensionale Darstellung eines ersten Ausführungsbeispiels einer erfindungsgemäßen Arretiervorrichtung;
- Fig. 2b: die Seitenansicht einer ersten Längsseite des ersten Ausführungsbeispiels der erfindungsgemäßen Arretiervorrichtung gemäß Fig. 2a;
- Fig. 2c: die Seitenansicht einer zweiten Längsseite des ersten Ausführungsbeispiels der erfindungsgemäßen Arretiervorrichtung gemäß Fig. 2a;
- Fig. 2d: die Seitenansicht einer dritten Längsseite des ersten Ausführungsbeispiels der erfindungsgemäßen Arretiervorrichtung gemäß Fig. 2a;
- Fig. 2e: die Seitenansicht einer Querseite des ersten Ausführungsbeispiels der erfindungsgemäßen Arretiervorrichtung gemäß Fig. 2a;
- Fig. 3a: die dreidimensionale Darstellung eines zweiten Ausführungsbeispiels einer erfindungsgemäßen Arretiervorrichtung;
- Fig. 3b: die Seitenansicht einer ersten Längsseite des zweiten Ausführungsbeispiels der erfindungsgemäßen Arretiervorrichtung gemäß Fig. 3a;
- Fig. 3c: die Seitenansicht einer zweiten Längsseite des zweiten Ausführungsbeispiels der erfindungsgemäßen Arretiervorrichtung gemäß Fig. 3a;
- Fig. 3d: die Seitenansicht einer dritten Längsseite des zweiten Ausführungsbeispiels der erfindungsgemäßen Arretiervorrichtung gemäß Fig. 3a;
- Fig. 3e: die Seitenansicht einer Querseite des zweiten Ausführungsbeispiels der erfindungsgemäßen Arretiervorrichtung gemäß Fig. 3a;
- Fig. 4a: die Seitenansicht einer ersten Längsseite eines dritten Ausführungsbeispiels einer erfindungsgemäßen Arretiervorrichtung;
- Fig. 4b: die Seitenansicht einer zweiten Längsseite des dritten Ausführungsbeispiels der erfindungsgemäßen Arretiervorrichtung gemäß Fig. 4a;
- Fig. 4c: die Oberansicht des dritten Ausführungsbeispiels der erfindungsgemäßen Arretiervorrichtung gemäß Fig. 4a;
- Fig. 4d: die Unteransicht des dritten Ausführungsbeispiels der erfindungsgemäßen Arretiervorrichtung gemäß Fig. 4a;
- Fig. 5a: die dreidimensionale Darstellung eines Ausführungsbeispiels eines erfindungsgemäßen Vorspann-Systems; und
- Fig. 5b: eine Draufsicht auf die Darstellung des Ausführungsbeispiels des erfindungsgemäßen Vorspann-Systems gemäß Fig. 5a.

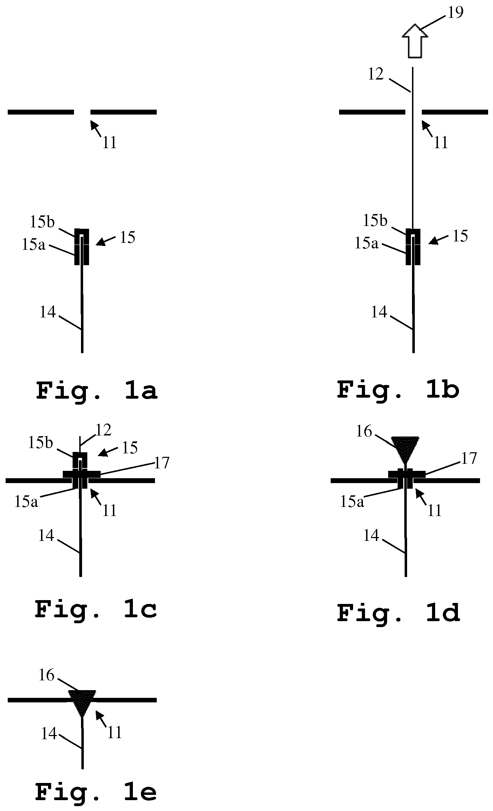

Fig. 1a zeigt die schematische Darstellung eines exemplarischen ersten Schrittes des erfindungsgemäßen Verfahrens. Hierbei wird an einem Spannglied 14, das später durch eine für das Einziehen des Spanngliedes 14 vorgesehene Öffnung 11 im Bereich der Turmkrone gezogen werden soll, zunächst eine Arretiervorrichtung 15 angebracht. Diese Arretiervorrichtung 15 weist einen ersten Teil 15a, insbesondere eine Bandklemme 15a, und einen zweiten Teil 15b, insbesondere eine Zugklemme 15b, auf, wobei die Bandklemme 15a und die Zugklemme 15b jeweils für sich am Spannglied 14 arretiert sind und zusätzlich trennbar miteinander verbunden sein können.

In einem nächsten Schritt gemäß Fig. 1b wird ein Zugelement 12, insbesondere ein Zugseil 12, am oberen Ende der Zugklemme 15b der Arretiervorrichtung 15 befestigt und das Spannglied 14 mit dessen Hilfe nach oben in Richtung Turmkrone gezogen (illustriert durch den Pfeil 19).

Weiterhin weist der erste Teil bzw. die Bandklemme 15a der Arretiervorrichtung 15 mindestens eine Öffnung auf, durch die seitlich mindestens ein Flachstahl 17 geschoben werden kann. Auf diese Weise wird, nachdem das Spannglied 14 entsprechend hochgezogen wurde, die Bandklemme 15a und damit auch die Arretiervorrichtung 15 im Bereich der Turmkrone temporär arretiert: Das seitliche Einbringen mindestens eines Flachstahls, der an den Seiten entsprechend übersteht, verhindert ein Hinunterfallen des Spannglieds 14 und arretiert dieses somit im Bereich der Turmkrone.

Anschließend werden gemäß Fig. 1d das Zugseil 12 und die Zugklemme 15b vom Spannglied 14 entfernt und am dadurch freigelegten Ende des Spannglieds 14 eine Fixiervorrichtung 16 angebracht, wobei dies problemlos möglich ist, da das Ende des Spannglieds 14 dank der Bandklemme 15a der Arretiervorrichtung 15, die mithilfe mindestens einen Flachstahls 17 das Spannglied 14 in Position hält, nicht unter Zug steht. Die Fixiervorrichtung 16 dient dazu, das Spannglied 14 endgültig im Bereich der Öffnung 11 zu fixieren, nachdem alle Teile der temporären Arretiervorrichtung 15 sowie der mindestens eine Flachstahl 17 im nächsten Schritt gemäß Fig. 1e entfernt wurden.

Die Fixiervorrichtung 16 ist dabei beispielsweise als Konus ausgeführt, durch den die Litzen des Spannglieds 14 gezogen und anschließend durch das Einfügen mindestens einen Keils in dem Konus fixiert werden.

Vorteilhafterweise fixiert sich das Spannglied 14 bzw. fixieren sich dessen Litzen auf diese Weise selbst in der Fixiervorrichtung 16, da Zug am Spannglied 14 dazu führt, dass der mindestens eine Keil weiter in den Konus gezogen wird, wodurch das Spannglied 14 festgepresst wird.

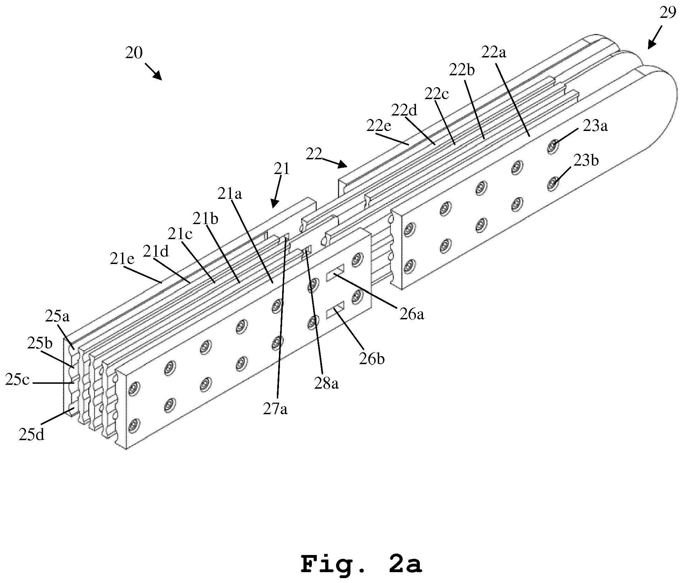

Weiterhin zeigt Fig. 2a ein erstes Ausführungsbeispiel einer Arretiervorrichtung 20 zum temporären Arretieren eines Spannglieds.

Die in Fig. 2a dargestellte Arretiervorrichtung 20 ist zur Aufnahme eines Spannglieds, das 4x4 Litzen aufweist, geeignet. Um vier Stränge, die jeweils aus vier parallel geführten Litzen bestehen, sicher in der Arretiervorrichtung 20 fixieren zu können, sind generell fünf Klemmbacken erforderlich.

Da die Arretiervorrichtung 20 jedoch in zwei Teile 21 und 22 zerlegbar ist, von denen jeder jeweils fünf Klemmbacken 21a-e und 22a-e aufweist, umfasst die Arretiervorrichtung 20 insgesamt zehn Klemmbacken, die entsprechend ineinander verschachtelt angeordnet werden, um die trennbare Verbindung des ersten Teils 21, insbesondere der Bandklemme 21, und des zweiten Teils 22, insbesondere der Zugklemme 22, der Arretiervorrichtung herzustellen. Vorteilhafterweise sorgt die Verbindung des ersten Teils 21 und des zweiten Teils 22 der Arretiervorrichtung 20 für eine besonders hohe Stabilität der Arretiervorrichtung 20.

Um die Klemmbacken 21a-e und 22a-e entsprechend fest aufeinander pressen und das eingeführte Spannglied dadurch sicher fixieren zu können, sind Schrauben vorgesehen, von denen zwei beispielhaft mit 23a und 23b bezeichnet sind.

Der Anpressdruck liegt in einem besonders vorteilhaften Bereich, wenn der erste Teil 21 bzw. die Bandklemme 21 der Arretiervorrichtung 20 vierzehn Schrauben, und der zweite Teil 22 bzw. die Zugklemme 22 der Arretiervorrichtung 20 zehn Schrauben aufweist.

Weiterhin weisen alle Klemmbacken 21a-e und 22a-e im Ausführungsbeispiel jeweils mindestens auf einer Seite vier Einkerbungen 25a-d auf, um die jeweils vier parallel geführten Litzen besonders sicher fixieren zu können, aber ohne diese zu beschädigen. Während jeweils die beiden äußeren Klemmbacken 21a, 21e des ersten Teils 21 der Arretiervorrichtung 20 und die beiden äußeren Klemmbacken 22a, 22e des zweiten Teils der Arretiervorrichtung 20 nur an ihren Innenseiten vier Einkerbungen aufweisen, weisen alle übrigen Klemmbacken 21b-d und 22b-d beidseitig vier Einkerbungen der Länge nach auf.

Des Weiteren weisen die entsprechenden Klemmbacken 21a, 21c, 21e übereinanderliegende Öffnungen 26a, 26b, 27a, 27b, 28a, 28b auf, so dass im hier gezeigten Fall zwei Flachstähle der Breite der Bandklemme 21 nach durch diese hindurchgeschoben werden können. Da die Flachstähle länger sind als die Bandklemme 21 breit ist, stehen diese über und arretieren so das Spannglied im Bereich der Turmkrone temporär, da ein Hinunterfallen des Spannglieds durch die für das Einziehen des Spannglieds vorgesehene Öffnung im Bereich der Turmkrone dank der überstehenden Flachstähle sicher verhindert wird.

Zudem weist die Zugklemme 22 der Arretiervorrichtung 20 in ihrem oberen Bereich 29 eine Öse zur Befestigung eines Zugelements, insbesondere eines Zugseils, auf, um das Spannglied in den Bereich der Turmkrone hochziehen zu können.

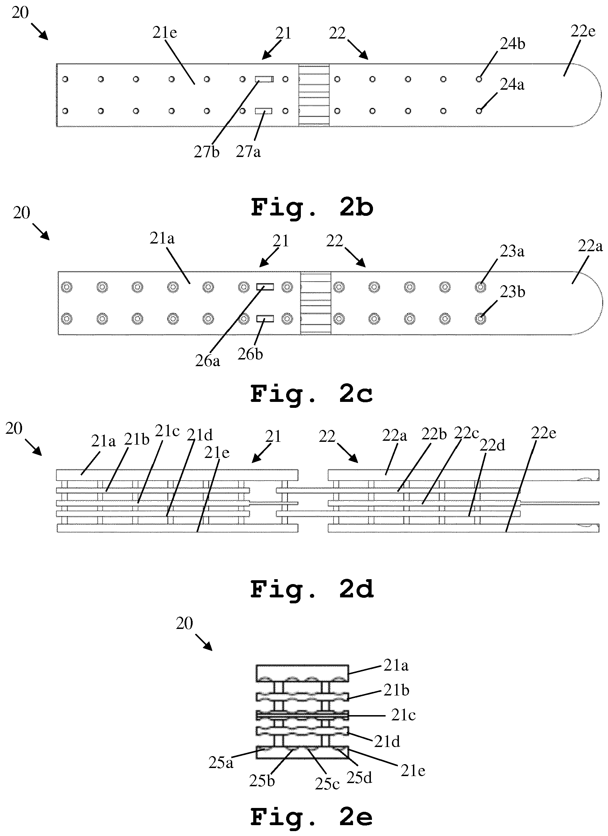

Während Fig. 2b ferner die Seitenansicht der Längsseite der Arretiervorrichtung 20 zeigt, die gemäß Fig. 2a nicht zu erkennen ist, zeigen die übrigen Darstellungen gemäß Fig. 2c, 2d und 2e Seitenansichten der Arretierungsvorrichtung 20, die auch der Fig. 2a entnommen werden können, weshalb die entsprechenden Bestandteile dieselben Bezugszeichen aufweisen. Zusätzlich erkennt man in Fig. 2b die Stellen, an denen die Schrauben, die dem Zusammenpressen der Klemmbacken 21a-e und 22a-e dienen und von denen beispielhaft zwei mit 24a und 24b bezeichnet werden, an der Außenseite der Klemmbacken 21e und 22e zum Vorschein kommen.

Die Schrauben finden weiterhin entweder dadurch Halt, dass die für die Schrauben vorgesehenen Löcher in den Klemmbacken 21a-e und 22a-e jeweils ein Gewinde aufweisen, oder dadurch, dass jede Schraube jeweils mithilfe einer Schraubenmutter an deren Ende im Bereich der Außenseite der Klemmbacken 21 und 22e fixiert wird.

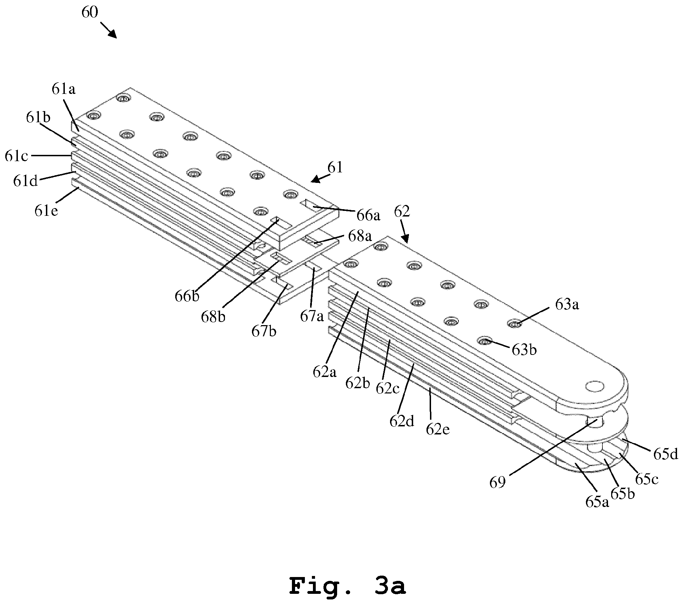

Fig. 3a zeigt ein zweites Ausführungsbeispiel einer Arretiervorrichtung 60 zum temporären Arretieren eines Spannglieds im Bereich der Turmkrone.
Die Arretiervorrichtung 60 weist einen ersten Teil 61, insbesondere eine Bandklemme 61, und einen zweiten Teil 62, insbesondere eine Zugklemme 62, auf. Die beiden Teile 61 und 62 sind in diesem Ausführungsbeispiel nicht miteinander verbindbar, was vorteilhafterweise zu einer leichteren Montage bzw. Demontage der Arretiervorrichtung 60 am bzw. vom Spannglied führt. Der vorteilhafte Verzicht einer expliziten Kopplung zwischen der Bandklemme 61 und der Zugklemme 62 nutzt die entsprechende Steifigkeit des Spannglieds aus.

Während der erste Teil 61 der Arretiervorrichtung 60 bzw. die Bandklemme 61 fünf Klemmbacken 61a-e aufweist, weist auch der zweite Teil 62 der Arretiervorrichtung 60 fünf Klemmbacken 62a-e auf. Zudem weisen alle innenliegenden Klemmbacken jeweils auf beiden Seiten vier Einkerbungen auf und alle außenliegenden Klemmbacken 61a, 61e, 62a, 62e jeweils auf ihrer inneren Seite vier Einkerbungen auf; diese Einkerbungen sind exemplarisch an der Klemmbacke 62e mit 65a-d bezeichnet. Somit lässt sich ein Spannglied, welches im Ausführungsbeispiel 4x4 Litzen aufweist, sicher in der Arretiervorrichtung fixieren, wobei gleichzeitig sichergestellt ist, dass die Litzen dank der entsprechenden Einkerbungen nicht beschädigt werden.

Um die Klemmbacken 61a-e und 62a-e entsprechend fest aufeinander zu pressen und das eingeführte Spannglied dadurch sicher fixieren zu können, sind Schrauben vorgesehen, von denen zwei beispielhaft mit 63a und 63b bezeichnet sind. Der Anpressdruck liegt in einem besonders vorteilhaften Bereich, wenn der erste Teil 61 bzw. die Bandklemme 61 der Arretiervorrichtung 60 zwölf Schrauben, und der zweite Teil 62 bzw. die Zugklemme 62 der Arretiervorrichtung 60 zehn Schrauben aufweist.

Des Weiteren weisen die Klemmbacken 61a, 61c, 61e übereinanderliegende Öffnungen 66a, 66b, 67a, 67b, 68a, 68b auf, so dass im hier gezeigten Fall zwei Flachstähle der Breite der Bandklemme 61 nach durch diese hindurchgeschoben werden können. Da die Flachstähle länger sind als die Bandklemme 61 breit ist, stehen diese über und arretieren so das Spannglied im Bereich der Turmkrone temporär, da ein Hinunterfallen des Spannglieds durch die für das Einziehen des Spannglieds vorgesehene Öffnung im Bereich der Turmkrone dank der überstehenden Flachstähle sicher verhindert wird.

Zudem weist die Zugklemme 62 der Arretiervorrichtung 60 in ihrem oberen Bereich einen Anhängebolzen 69 zur Befestigung eines Zugelements, insbesondere eines Zugseils, auf, um das Spannglied in den Bereich der Turmkrone hochziehen zu können.

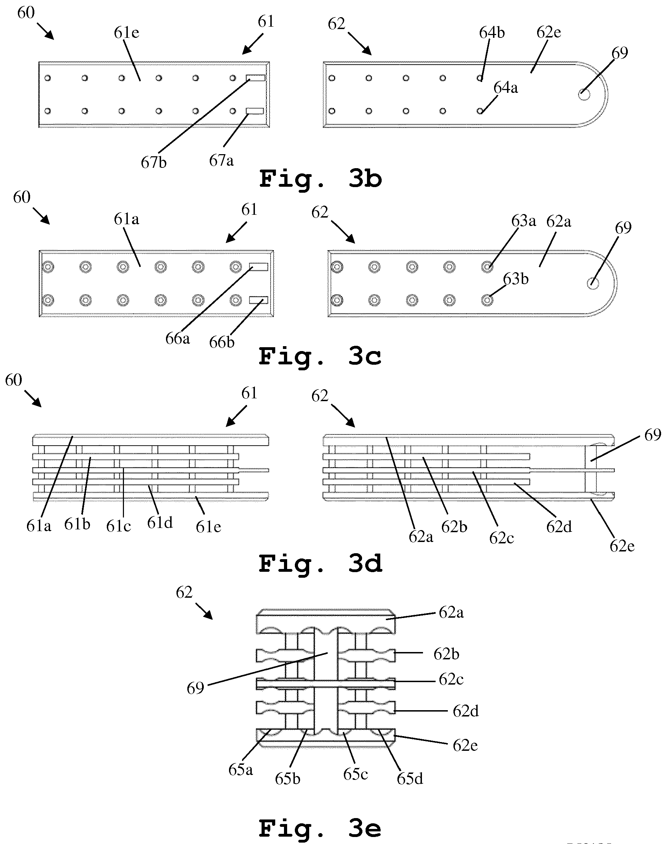

Während Fig. 3b ferner die Seitenansicht der Längsseite der Arretiervorrichtung 60 zeigt, die gemäß Fig. 3a nicht zu erkennen ist, zeigen die übrigen Darstellungen gemäß Figuren 3c, 3d und 3e Seitenansichten der Arretierungsvorrichtung 60, die auch der Fig. 2a entnommen werden können, weshalb die entsprechenden Bestandteile dieselben Bezugszeichen aufweisen. Zusätzlich erkennt man gemäß Fig. 3b die Stellen, an denen die Schrauben, die dem Zusammenpressen der Klemmbacken 61a-e und 62a-e dienen und von denen beispielhaft zwei mit 64a und 64b bezeichnet werden, an der Außenseite der Klemmbacken 61e und 62e zum Vorschein kommen.

Die Schrauben finden weiterhin entweder dadurch Halt, dass die für die Schrauben vorgesehenen Löcher in den Klemmbacken 61a-e und 62a-e jeweils ein Gewinde aufweisen, oder dadurch, dass jede Schraube jeweils mithilfe einer Schraubenmutter an deren Ende im Bereich der Außenseite der Klemmbacken 61 und 62e fixiert wird.

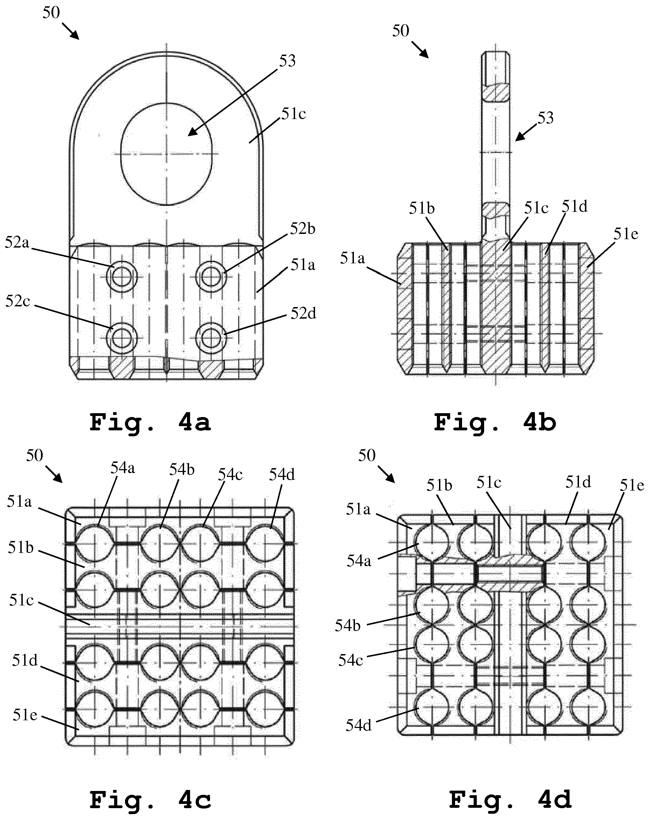

Weiterhin zeigt Fig. 4a die Seitenansicht einer ersten Längsseite eines dritten Ausführungsbeispiel einer Arretiervorrichtung 50 zum temporären Arretieren eines Spannglieds im Bereich der Turmkrone. Während Fig. 4b ferner die Seitenansicht einer zweiten Längsseite der Arretiervorrichtung 50 illustriert, sind in den Fig. 4c und 4d eine Oberansicht sowie eine Unteransicht der Arretiervorrichtung 50 dargestellt.

Im Gegensatz zum ersten und zweiten Ausführungsbeispiel der Arretiervorrichtung weist die Arretiervorrichtung 50 keine zwei Teile insbesondere in Form einer Bandklemme und einer Zugklemme auf. Vorteilhafterweise können mithilfe dieser Ausführungsform sowohl Größe als auch Gewicht der Arretiervorrichtung reduziert werden.

Da die Arretiervorrichtung 50 fünf Klemmbacken 61a-e aufweist, weist auch der zweite Teil 62 der Arretiervorrichtung 60 fünf Klemmbacken 51a-e auf. Zudem weisen alle innenliegenden Klemmbacken 51b, 51c, 51d jeweils auf beiden Seiten vier Einkerbungen auf und alle außenliegenden Klemmbacken 51a, 51e jeweils auf ihrer inneren Seite vier Einkerbungen auf; diese Einkerbungen sind exemplarisch an der Klemmbacke 51a mit 64a-d bezeichnet. Somit lässt sich ein Spannglied, welches im Ausführungsbeispiel 4x4 Litzen aufweist, sicher in der Arretiervorrichtung fixieren, wobei gleichzeitig sichergestellt ist, dass die Litzen dank der entsprechenden Einkerbungen nicht beschädigt werden.

Um die Klemmbacken 51a-e entsprechend fest aufeinander zu pressen und das eingeführte Spannglied dadurch sicher fixieren zu können, sind Bohrungen bzw. Schrauben 52a-d vorgesehen. Der Anpressdruck liegt bei diesem dritten Ausführungsbeispiel in einem besonders vorteilhaften Bereich, wenn die Arretiervorrichtung 50 vier Schrauben aufweist. Vorteilhafterweise konnte die Anzahl der Schrauben im Vergleich zum ersten und zweiten Ausführungsbeispiel deutlich reduziert werden, was die Montage wesentlich erleichtert und beschleunigt. In diesem Rahmen sind die Einkerbungen der Klemmbacken 51a-e vorzugsweise derart ausgebildet, dass sie jeweils die Litzen eines Spanngliedes sicher halten können, wobei jeder Litze insbesondere vor dem Einführen in die Arretiervorrichtung 50 ihre Ummantelung jeweils vollständig mindestens im Bereich der Arretiervorrichtung entfernt wurde.

Die Schrauben finden ferner entweder dadurch Halt, dass die für die Schrauben vorgesehenen Löcher in den Klemmbacken 51a-e jeweils ein Gewinde aufweisen, oder dadurch, dass jede Schraube jeweils mithilfe einer Schraubenmutter an deren Ende im Bereich der Außenseite der Klemmbacken 51a bzw. 51e fixiert wird.

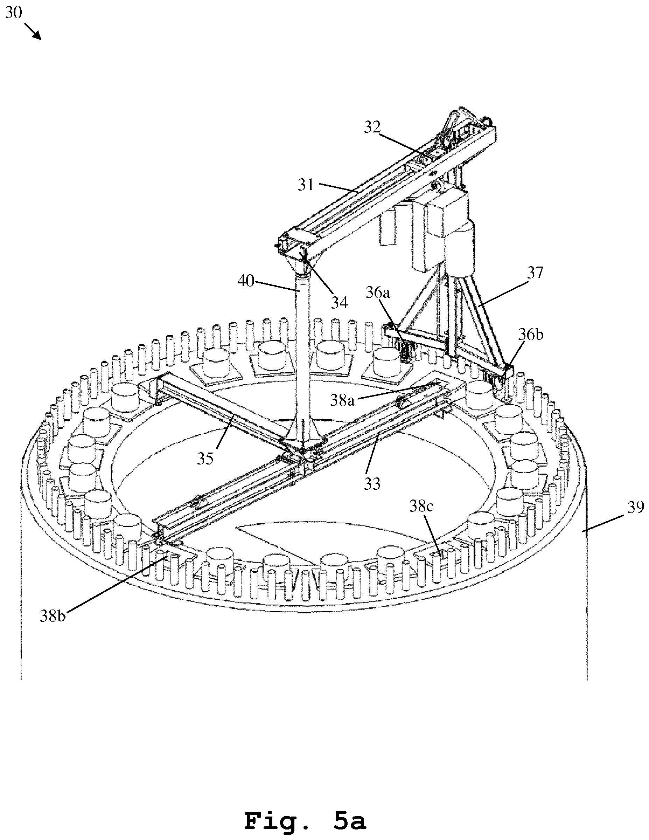

Weiterhin weist die Arretiervorrichtung 50, insbesondere die mittlere Klemmbacke 51c der Arretiervorrichtung 50, in ihrem oberen Bereich eine Öse 53 zur Befestigung eines Zugelements, insbesondere eines Zugseils, auf, um das Spannglied in den Bereich der Turmkrone hochziehen zu können. Dementsprechend ist insbesondere die mittlere Klemmbacke 51c der Arretiervorrichtung 50 vorzugweise größer als die übrigen Klemmbacken 51a, 51b, 51d, 51e, da die mittlere Klemmbacke 51c den Bereich der Fixierung der Litzen des Spanngliedes überragt, um entsprechenden Platz für die Öse 53 zu bieten. Der Teil der Arretiervorrichtung 50, der den zusätzlichen Platz für die Öse 53 bietet, kann beispielweise integral oder mithilfe einer Schraub- und/oder Steckverbindung mit der mittleren Klemmbacke 51c der Arretiervorrichtung 50 verbunden sein.
Des Weiteren illustriert Fig. 5a ein Ausführungsbespiel eines erfindungsgemäßen Vorspann-Systems 30.

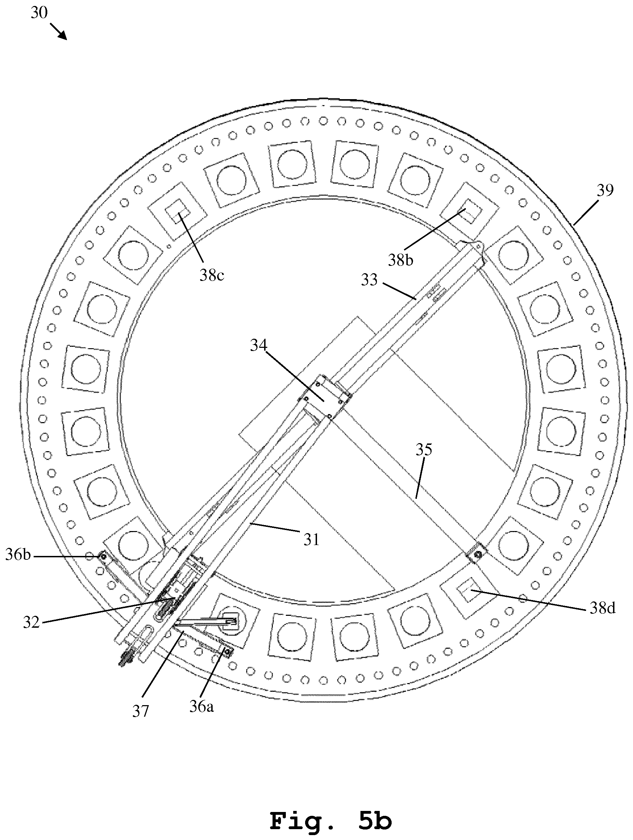

Gemäß Fig. 5a und 5b ist ein Traverse 33 im Bereich der Turmkrone 39 so angeordnet, dass deren Mitte im Zentrum der Turmkrone 39 liegt. Zudem ist die Traverse 33 zusätzlich mit einem Verbindungsstück 35 gegen Verrutschen bzw. Abrutschen gesichert, wobei das Verbindungsstück 35 insbesondere die Mitte der Traverse 33 mit dem Randbereich der Turmkrone 39 verbindet und vorzugsweise senkrecht zur Traverse 33 angeordnet ist.

Ferner erstreckt sich ausgehend von der Traverse 33 eine Achse 40 nach oben. Die Achse 40 verläuft vorzugsweise parallel zu einer Achse durch das Zentrum der Turmkrone 39 bzw. zur Rotationsachse der Turmkrone 39. Weiter vorzugsweise deckt sich die Achse 40 mit der Achse durch das Zentrum der Turmkrone 39 bzw. mit der Rotationsachse der Turmkrone 39.

Zudem ist die Achse 40 drehbar an der Traverse 33 angeordnet. Dementsprechend ist sie drehbar um einen Drehpunkt 34, der vorzugsweise im Zentrum oder zumindest in der Nähe des Zentrums der Turmkrone 39 liegt.

Weiterhin ist vorzugsweise senkrecht an der Achse 40 und damit vorzugsweise parallel zur Traverse 33 ein Arm 31 angeordnet, der eine verschiebbare Winde 32 aufweist. Die verschiebbare Winde 32 dient dazu, ein Spannglied mithilfe eines Zugelements, insbesondere mithilfe eines Zugseils, durch eine dafür vorgesehene Öffnung 38a, 38b, 38c, 38d hochzuziehen. Aufgrund der Tatsache, dass die Winde 32 verschiebbar am Arm 31 angeordnet ist, lässt sich die Winde 32 besonders einfach über der gewünschten Öffnung, beispielsweise über einer der Öffnungen 38a, 38b, 38c, 38d positionieren.

Damit der Arm 31 der Last des Spannglieds sicher Stand hält, ist an dessen Ende vorzugsweise senkrecht am Arm 31 und damit vorzugsweise parallel zur Achse 40 eine Stütze 37 angeordnet. Die Stütze 37 steht dabei vorteilhafterweise nicht fest auf der Wandung der Turmkrone 39, sondern mithilfe feststellbarer Räder 36a, 36b auf der Wandung der Turmkrone 39, so dass ein Weiterschieben des Arms 31 bzw. ein Drehen des Arms 31 um den Drehpunkt 34 und damit auch ein Positionieren der Winde 32 von einer Öffnung, beispielsweise von einer der Öffnungen 38a, 38b, 38c, 38d zur nächsten Öffnung mit geringstmöglichem Aufwand geschehen kann.

Abschließend sei angemerkt, dass die Stütze 37 vorteilhafterweise mehrere Teile aufweist, so dass sich eine optimale Lastverteilung auf die feststellbaren Räder 36a, 36b bzw. auf die festen Spindelfüße neben den Rädern ergibt. Hierzu drückt die Last des Arms 31 und der daran angeordneten Winde 32, an der ein Spannglied mithilfe des Zugelements und der Arretiervorrichtung befestigt ist, auf eine mittlere Teilstütze, die mittig an einer Basis angeordnet ist, wobei die Basis die feststellbaren Räder 36a und 36b verbindet. Zudem verläuft die mittlere Teilstütze vorzugsweise parallel zur Achse 40. Des Weiteren sind zu der mittleren Teilstütze eine linke und eine rechte Teilstütze angeordnet, so dass diese schräg zur Basis und zur mittleren Teilstütze verlaufen, d.h., dass die linke und die rechte Teilstütze jeweils den entsprechenden äußeren Teil der Basis mit dem von der Basis fernen Teil der mittleren Stütze miteinander verbinden.

## Patentansprüche

1. Ein Verfahren zum Vorspannen eines Turmbauwerks aus übereinander angeordneten Bauelementen, die mithilfe mehrerer Spannglieder (14) vorgespannt werden,
mit folgenden Verfahrensschritten:
- Hochziehen der Spannglieder (14) jeweils mithilfe eines Zugelements (12), das von einer Turmkrone (39) am oberen Ende hinabgelassen wird, wobei die Spannglieder (14) jeweils im Bereich eines Fundaments des Turmbauwerks mithilfe einer Vorspannvorrichtung vorgespannt und anschließend mithilfe einer Fixiervorrichtung (16) fixiert werden,
**gekennzeichnet durch**
- Temporäres Arretieren der hochgezogenen Spannglieder (14) jeweils mithilfe einer Arretiervorrichtung (20, 60) im Bereich der Turmkrone (39) und wobei die Arretiervorrichtung (20, 60)nach dem Anbringen der Fixiervorrichtung (16), die ein Spannglied (14) jeweils endgültig im Bereich der Turmkrone (39) fixiert, entfernt wird.

2. Das Verfahren nach Anspruch 1,
wobei die Spannglieder (14) im Inneren des Turmbauwerks aus den übereinander angeordneten Bauelementen, aber außerhalb der Wandung der übereinander angeordneten Bauelemente geführt sind.

3. Eine Arretiervorrichtung (20, 60) zur Aufnahme eines Spannglieds (14) zum Vorspannen eines Turmbauwerks aus übereinander angeordneten Bauelementen mit Hilfe eines Verfahrens gemäß Anspruch 1 oder 2, welche mindestens zwei Klemmbacken (21a-e, 22a-e, 61a-e, 62a-e) aufweist, deren Abstand mithilfe einer Einstelleinrichtung einstellbar ist,
wobei die Arretiervorrichtung (20, 60) einen ersten Teil (21, 61) und einen zweiten Teil (22, 62) aufweist wobei der erste Teil (21, 61) und der zweite Teil (22, 62) der Arretiervorrichtung (20, 60) miteinander verbindbar sind, **dadurch gekennzeichnet, dass** der erste Teil (21, 61) der Arretiervorrichtung (20, 60) mindestens eine Öffnung (26a, 26b, 27a, 27b, 28a, 28b, 66a, 66b, 67a, 67b, 68a, 68b) aufweist, durch die seitlich mindestens ein Flachstahl (17) geschoben werden kann, so dass in Einbaulage das seitliche Einbringen des mindestens einen Flachstahls (17), der an den Seiten entsprechend übersteht, ein Hinunterfallen des Spannglieds (14) verhindert und dieses somit im Bereich der Turmkrone (39) arretiert.

4. Die Arretiervorrichtung (20, 60) nach Anspruch 3, wobei die Arretiervorrichtung (20, 60) mehrere, insbesondere fünf, Klemmbacken (21a-e, 22a-e, 61a-e, 62a-e) umfasst, so dass das Spannglied (14) die Arretiervorrichtung (20, 60) auch bei hohen Zugkräften nicht verlassen kann.

5. Die Arretiervorrichtung (20, 60) nach Anspruch 3 oder 4,
wobei jede Klemmbacke (21a-e, 22a-e, 61a-e, 62a-e) auf einer Seite und/oder auf beiden Seiten mehrere Einkerbungen (25a-d, 65a-d) aufweist, um Spannelemente, insbesondere Litzen oder Drähte, des Spannglieds (14) sicher in Position zu halten.

6. Die Arretiervorrichtung (20, 60) nach einem der Ansprüche 3 bis 5,
wobei die Einstelleinrichtung mindestens eine Schraubverbindung (23a, 24a, 23b, 24b, 63a, 63b, 64a, 64b) aufweist, wobei der Abstand zwischen den Klemmbacken (21a-e, 22a-e, 61a-e, 62a-e) mittels Schrauben der Schraubenverbindung variierbar ist.

7. Die Arretiervorrichtung (20, 60) nach einem der Ansprüche 3 bis 6,
wobei die Arretiervorrichtung (20, 60) mindestens eine Öse (53) oder mindestens einen Anhängebolzen (69) zur Befestigung eines Zugelements, insbesondere eines Zugseils, aufweist.

8. Ein Vorspann-System (30) zum Vorspannen eines Turmbauwerks aus übereinander angeordneten Bauelementen, die mithilfe mehrerer Spannglieder (14) vorgespannt sind, **dadurch gekennzeichnet, dass** das Vorspann-System eine Arretiervorrichtung (20, 60) nach einem der Ansprüche 3 bis 7 umfasst, wobei das Vorspann-System (30) eine im Bereich einer Turmkrone (39) befindliche Winde (32) umfasst, um die Spannglieder (14) jeweils mithilfe eines Zugelements (12) hochzuziehen, wobei sich die Turmkrone (39) im oberen Bereich des Turmbauwerks befindet,
wobei die Winde (32) an einem schwenkbaren und/oder drehbaren Arm (31) angeordnet ist.

9. Das Vorspann-System (30) nach Anspruch 8,
wobei die Spannglieder (14) im Inneren des Turmbauwerks aus den übereinander angeordneten Bauelementen, aber außerhalb der Wandung der übereinander angeordneten Bauelemente geführt sind.

10. Das Vorspann-System nach Anspruch 8,
wobei der schwenkbare und/oder drehbare Arm (31) derart insbesondere an einer im Bereich der Turmkrone (39) befindlichen Traverse (33) arretiert ist, dass der Drehpunkt (34) des schwenkbaren und/oder drehbaren Arms (31) im Zentrum oder nahe des Zentrums der Turmkrone (39) liegt.

11. Das Vorspann-System (30) nach Anspruch 10,
wobei der schwenkbare und/oder drehbare Arm (31) im Bereich des vom Drehpunkt (34) entfernten Teils eine Stütze (37) aufweist.

12. Das Vorspann-System (30) nach Anspruch 11, wobei die Stütze (37) Räder (36a, 36b) aufweist, so dass die Stütze (37) im Bereich der Turmkrone (39) verfahrbar ist.

13. Das Vorspann-System (30) nach einem der Ansprüche 8 bis 12,
wobei durch Schwenken und/oder Drehen des schwenkbaren und/oder drehbaren Arms (31) die Winde (32) derart über jeder von mehreren für das Einbringen eines Spanngliedes (14) vorgesehenen Öffnung (38a-d) im Bereich der Turmkrone (39) positionierbar ist, dass ein Hochziehen des entsprechenden Spannglieds (14) mithilfe des Zugelements (12) möglich ist.

## Claims

1. A method for the pretensioning of a tower structure made of construction elements arranged one above the other, which are pretensioned with the help of several tendons (14), with the following method steps:
- hoisting of the tendons (14), in each case with the help of a traction element (12), which is lowered at the upper end from a tower head (39), wherein the tendons (14) are each pretensioned in the region of a foundation of the tower structure with the help of a pretensioning device and then fixed with the help of a fixing device (16),
**characterised by**
- temporary locking of the hoisted tendons (14) in the region of the tower head (39), in each case with the help of a locking device (20, 60), and wherein the locking device (20, 60) is removed after the attachment of the fixing device (16), which fixes each tendon (14) finally in the region of the tower head (39).

2. The method according to claim 1,
wherein the tendons (14) are guided in the interior of the tower structure made of the construction elements arranged one above the other, but outside the wall of the construction elements arranged one above the other.

3. A locking device (20, 60) for retaining a tendon (14) for the pretensioning of a tower structure made of construction elements arranged one above the other with the help of a method according to claim 1 or 2, which comprises at least two clamping jaws (21a-e, 22a-e, 61a-e, 62a-e), of which the spacing is adjustable with the help of an adjustment device,
wherein the locking device (20, 60) comprises a first part (21, 61) and a second part (22, 62),
wherein the first part (21, 61) and the second part (22, 62) of the locking device (20, 60) can be connected to one another, **characterised in that**
the first part (21, 61) of the locking device (20, 60) comprises at least one aperture (26a, 26b, 27a, 27b, 28a, 28b, 66a, 66b, 67a, 67b, 68a, 68b), through which at least one steel bar (17) can be pushed laterally, so that, in the installation position, the lateral insertion of the at least one steel bar (17), which projects correspondingly at the sides, prevents the tendon (14) from dropping down and accordingly locks the latter in the region of the tower head (39).

4. The locking device (20, 60) according to claim 3,
wherein the locking device (20, 60) comprises several, especially five, clamping jaws (21a-e, 22a-e, 61a-e, 62a-e), so that the tendon (14) cannot leave the locking device (20, 60) even with high traction forces.

5. The locking device (20, 60) according to claim 3 or 4, wherein each clamping jaw (21a-e, 22a-e, 61a-e, 62a-e) comprises, on one side and/or on both sides, several grooves (25a-d, 65a-d) to hold traction elements, especially cords or wires of the tendon (14), securely in position.

6. The locking device (20, 60) according to any one of claims 3 to 5,
wherein the adjustment device comprises at least one screw connection (23a, 24a, 23b, 24b, 63a, 63b, 64a, 64b), wherein the spacing between the clamping jaws (21a-e, 22a-e, 61a-e, 62a-e) can be varied with the help of screws of the screw connection.

7. The locking device (20, 60) according to any one of claims 3 to 6,
wherein the locking device (20, 60) comprises at least one eye (53) or at least one attachment pin (69) for the attachment of a traction element, especially a traction cable.

8. A pretensioning system (30) for the pretensioning of a tower structure made of construction elements arranged one above the other, which are pretensioned with the help of several tendons (14),
**characterised in that**
the pretensioning system comprises a locking device (20, 60) according to any one of claims 3 to 7,
wherein the pretensioning system (30) comprises a hoist (32) disposed in the region of a tower head (39) to hoist the tendons (14), in each case with the help of a traction element (12), wherein the tower head (39) is disposed in the upper region of the tower structure,
wherein the hoist (32) is arranged on a pivoting and/or rotatable arm (31).

9. The pretensioning system (30) according to claim 8,
wherein the tendons (14) are guided in the interior of the tower structure made of the construction elements arranged one above the other, but outside the wall of the construction elements arranged one above the other.

10. The pretensioning system according to claim 8,
wherein the pivoting and/or rotatable arm (31) is locked especially on a crossbeam (33) disposed in the region of the tower head (39) in such a manner that the pivot point (34) of the pivoting and/or rotatable arm (31) is disposed in the centre or close to the centre of the tower head (39).

11. The pretensioning system (30) according to claim 10, wherein the pivoting and/or rotatable arm (31) comprises a support (37) in the region of the part remote from the pivot point (34).

12. The pretensioning system (30) according to claim 11, wherein the support (37) comprises wheels (36a, 36b), so that the support (37) is displaceable in the region of the tower head (39).

13. The pretensioning system (30) according to any one of claims 8 to 12,
wherein, through pivoting and/or rotation of the pivoting and/or rotatable arm (31), the hoist can be positioned above each of several apertures (38a-d) provided for the insertion of a tendon (14) in the region of the tower head (39), in such a manner that a hoisting of the corresponding tendon (14) with the help of the traction element (12) is possible.

## Revendications

1. Procédé destiné à précontraindre une structure de tour formée d'éléments de construction agencés les uns sur les autres et qui sont précontraints à l'aide de plusieurs organes de contrainte (14), avec les étapes de procédé suivantes :
- hissage des organes de contrainte (14) respectivement à l'aide d'un élément de traction (12) qui est abaissé au niveau de l'extrémité supérieure par une couronne de tour (39), dans lequel les organes de contrainte (14) sont respectivement précontraints dans la région d'une fondation de la structure de tour à l'aide d'un dispositif de précontrainte et sont ensuite fixés à l'aide d'un dispositif de fixation (16),
**caractérisé par**
- un blocage temporaire des organes de contrainte (14) hissés respectivement à l'aide d'un dispositif de blocage (20, 60) dans la région de la couronne de tour (39) et dans lequel le dispositif de blocage (20, 60) est retiré après la mise en place du dispositif de fixation (16) qui fixe un organe de contrainte (14) respectivement définitivement dans la région de la couronne de tour (39).

2. Procédé selon la revendication 1,
dans lequel les organes de contrainte (14) sont guidés à l'intérieur de la structure de tour formée des éléments de construction agencés les uns sur les autres, mais à l'extérieur de la paroi des éléments de construction agencés les uns sur les autres.

3. Dispositif de blocage (20, 60) destiné à recevoir un organe de contrainte (14) pour précontraindre une structure de tour formée d'éléments de construction agencés les uns sur les autres à l'aide d'un procédé selon la revendication 1 ou 2, lequel dispositif présente au moins deux mâchoires de serrage (21a-e, 22a-e, 61a-e, 62a-e) dont la distance peut être réglée à l'aide d'un équipement de réglage, dans lequel le dispositif de blocage (20, 60) présente une première partie (21, 61) et une seconde partie (22, 62) dans lequel la première partie (21, 61) et la seconde partie (22, 62) du dispositif de blocage (20, 60) peuvent être reliées l'une à l'autre, **caractérisé en ce que** la première partie (21, 61) du dispositif de blocage (20, 60) présente au moins un orifice (26a, 26b, 27a, 27b, 28a, 28b, 66a, 66b, 67a, 67b, 68a, 68b) à travers lequel au moins un acier plat (17) peut être glissé latéralement de sorte que, dans la position de montage, l'introduction latérale du au moins un acier plat (17) qui dépasse de façon correspondante au niveau des côtés empêche une chute de l'organe de contrainte (14) et bloque ainsi celui-ci dans la région de la couronne de tour (39).

4. Dispositif de blocage (20, 60) selon la revendication 3,
dans lequel le dispositif de blocage (20, 60) comprend plusieurs, en particulier cinq, mâchoires de serrage (21a-e, 22a-e, 61a-e, 62a-e) de sorte que l'organe de contrainte (14) ne puisse pas quitter le dispositif de blocage (20, 60) même avec des forces de traction élevées.

5. Dispositif de blocage (20, 60) selon la revendication 3 ou 4,
dans lequel chaque mâchoire de serrage (21a-e, 22a-e, 61a-e, 62a-e) présente plusieurs encoches (25a-d, 65a-d) sur un côté et/ou sur les deux côtés pour maintenir fermement en position des éléments de contrainte, en particulier des cordons ou des câbles, de l'organe de contrainte (14).

6. Dispositif de blocage (20, 60) selon l'une des revendications 3 à 5,
dans lequel l'équipement de réglage présente au moins une liaison vissée (23a, 24a, 23b, 24b, 63a, 63b, 64a, 64b), dans lequel la distance entre les mâchoires de serrage (21a-e, 22a-e, 61a-e, 62a-e) peut être modifiée au moyen de vis de la liaison vissée.

7. Dispositif de blocage (20, 60) selon l'une des revendications 3 à 6,
dans lequel le dispositif de blocage (20, 60) présente au moins un œillet (53) ou au moins un boulon d'attelage (69) pour consolider un élément de traction, en particulier un câble de traction.

8. Système de précontrainte (30) destiné à précontraindre une structure de tour formée d'éléments de construction agencés les uns sur les autres et qui sont précontraints à l'aide de plusieurs organes de contrainte (14), **caractérisé en ce que** le système de précontrainte comprend un dispositif de blocage (20, 60) selon l'une des revendications 3 à 7,
dans lequel le système de précontrainte (30) comprend un vérin (32) se trouvant dans la région d'une couronne de tour (39) pour hisser les organes de contrainte (14) respectivement à l'aide d'un élément de traction (12), dans lequel la couronne de tour (39) se trouve dans la région supérieure de la structure de tour,
dans lequel le vérin (32) est agencé contre un bras (31) pivotant et/ou rotatif.

9. Système de précontrainte (30) selon la revendication 8,
dans lequel les organes de contrainte (14) sont guidés à l'intérieur de la structure de tour formée des éléments de construction agencés les uns sur les autres, mais à l'extérieur de la paroi des éléments de construction agencés les uns sur les autres.

10. Système de précontrainte selon la revendication 8,
dans lequel le bras (31) pivotant et/ou rotatif est bloqué, en particulier contre une traverse (33) se trouvant dans la région de la couronne de tour (39), de telle sorte que le point de rotation (34) du bras (31) pivotant et/ou rotatif se situe dans le centre ou près du centre de la couronne de tour (39).

11. Système de précontrainte (30) selon la revendication 10,
dans lequel le bras (31) pivotant et/ou rotatif présente un support (37) dans la région de la partie éloignée du point de rotation (34).

12. Système de précontrainte (30) selon la revendication 11,
dans lequel le support (37) présente des roues (36a, 36b) de sorte que le support (37) puisse être déplacé dans la région de la couronne de tour (39).

13. Système de précontrainte (30) selon l'une des revendications 8 à 12,
dans lequel le vérin (32) peut être positionné, par pivotement et/ou rotation du bras (31) pivotant et/ou rotatif, dans la région de la couronne de tour (39) par-dessus chacun de plusieurs orifices (38a-d) prévus pour l'introduction d'un organe de contrainte (14), de telle sorte qu'un hissage de l'organe de contrainte (14) correspondant soit possible à l'aide de l'élément de traction (12).
